# EUROPEAN PATENT SPECIFICATION

(11) **EP 2 319 946 B1**
(45) Date of publication and mention of the grant of the patent: **17.04.2013**
(21) Application number: 09839046.1
(22) Date of filing: 11.12.2009
(51) Int. Cl.: C22B 19/04, C22B 1/00, C22B 19/30, F27D 11/06, F27B 14/06

(54) **DEZINCING APPARATUS AND DEZINCING METHOD**
ENTZINKUNGSVORRICHTUNG UND ENTZINKUNGSVERFAHREN
APPAREIL DE DÉZINGAGE ET PROCÉDÉ DE DÉZINGAGE

(30) Priority: 24.08.2009 JP 2009192988; 24.08.2009 JP 2009192989
(43) Date of publication of application: 11.05.2011
(73) Proprietor: Tokuden Co., Ltd., Amagasaki-shi Hyogo 660-0881 (JP); Chubu Electric Power Co., Inc., Nagoya-shi Aichi 461-8680 (JP)
(72) Inventor: NAKAMURA, Shigeyuki, Amagasaki-shi Hyogo 660-0881 (JP); FUJIWARA, Toshimitsu, Amagasaki-shi Hyogo 660-0881 (JP); TANAHASHI, Naoki, Nagoya-shi Aichi 459-8522 (JP); YAMADA, Takahiro, Nagoya-shi Aichi 461-8680 (JP)
(74) Representative: Riebling, Peter
(86) International application number: PCT/JP2009/006785
(87) International publication number: WO 2011/024244

(56) References cited:
- JP-A- 7 252 545
- JP-A- 8 083 676
- JP-A- 11 314 682
- JP-A- 56 040 070
- JP-A- 2000 346 560
- JP-A- 2002 105 546
- US-A- 5 757 843
- US-A1- 2007 099 039

## Description

### Technical Field

The present invention relates to an inductive heating dezincing apparatus and an inductive heating dezincing method which heat galvanized steel plates to evaporate and remove zinc.

### Background Art

Conventionally, in the cast industry, a ratio of using melted scrap steel plates as a raw material of cast iron has been increased. Typical examples of the scrap steel plates to be reused include galvanized steel plates. An electric furnace melting method is regularly used as a melting means of the scrap steel plates. However, there are various problems when the galvanized steel plates are melted by the electric furnace melting method. For example, when the galvanized steel plates are directly melted, zinc permeates and passes through a refractory of a furnace to damage a heating coil. This damage shortens the life of a melting facility to increase maintenance cost. Since zinc has a low boiling point and is easily evaporated, zinc vapor may cause the deterioration of an operation environment, or zinc may be mixed in a product to deteriorate the quality of the product.

For such problems, the galvanized steel plates are generally subjected to a pretreatment by a vacuum-heating dezincing facility in order to previously melt and separate zinc before melting the galvanized steel plates.

An inductive heating dezincing apparatus as shown in Patent Document 1 has been also proposed. According to this inductive heating dezincing apparatus, galvanized steel plates are induction-heated by energizing a heating coil to melt zinc, and zinc flower generated by partially evaporating the melted zinc can be exhausted to the outside from a material outlet.

### Patent Literature

JP 8083676 A discloses an induction heating dezincing device. A galvanized steel plate is induction heated in a heating cylinder to melt only zinc, and an evaporated zinc oxide is discharged from an exhaust duct. Also, a dezinced steel plate and granulated zinc are discharged from an exhaust port to a lower transport tool. In this case, the granulated zinc passes a wire gauze and drops to a save-all. On the other hand, the remaining dezinced steel plate is fed to a melting furnace, thereby obtaining molten metal. Thus, the reaction of zinc with a furnace refractory material, or the penetration of zinc vapours into the lining layer of a melting chamber can be prevented to restrain the occurrence of a cause to shorten furnace service life. Also, the zinc can be removed and the quality of cast iron can be thereby improved. Furthermore, inexpensive galvanized steel plate can be re-used, thereby enhancing economy. To restrain a reduction in the service life of an induction furnace lining due to the deposition or the line of zinc, and re-use a galvanized steel plate for providing the high quality of cast iron by first melting the zinc of the steel plate for the removal and discharge thereof and, then, melting the dezinced steel plate.

US 5757843 A1 discloses a induction melting system including gas exhaust. An annular exhaust gas passage and an airtight retention member for keeping the inside of a crucible induction furnace airtight are installed on the top of the furnace, and an exhaust system under atmospheric pressure is connected to a valve via an air duct that penetrates the airtight retention member. In addition, a sealing cover that has a valve, which can be opened and closed, is used to keep the inside of the furnace airtight, while a system under reduced pressure is connected to the valve. These two systems constitute the entire exhaust system.

US 2007/099039 A1 discloses an appliance for converting household waste into energy according to the preamble of independent claim 1 of present invention. A method and reactor system is configured as an appliance for the destruction of residential and building waste to form hydrogen-rich syngas. This syngas is used to power a fuel cell for the generation of electric power, steam and heat or cooling for use in residences and buildings as well as hydrogen fuel for vehicles. The waste conversion rector that carries out the endothermic reactions of steam reforming is heated with the waste heat and electrical power. Alternatively, this reactor can be heated by a natural gas burner. This reactor is designed as a rotary drum, into which are placed bags of waste that can consist of normal garbage as well as toilet solid waste. Glass and metal are not melted in this drum and are recovered as completely sterilized at the end of the process cycle.

JP 56040070 A discloses a thermal treatment apparatus for mineral, waste and so on, according to the preamble of independent claim 1 of present invention. This thermal treatment apparatus comprises an induction type electric furnace; a heating medium comprising a metal which is fed into said induction type electric furnace and is capable of being heated by induction heating; and a contact promotion apparatus which makes a processing material continuously in contact with said heating medium which is heated to a red-hot state or melted by induction heating. A gas transfer pipe is connected to a furnace chamber where said processing material is made to be in contact with said heating medium, whereby a condenser is connected to said gas transfer pipe.

### Summary of Invention

### Technical Problem

However, in the apparatus of the above-mentioned Patent Document JP 8083676 A, heat is not spread to the galvanized steel plates positioned at the central part of a heating cylinder. The galvanized steel plates may be conveyed into an inductive melting furnace with zinc insufficiently removed and zinc oxidized to cause the contamination of zinc in the product. When, particularly, zinc during a treatment contacts with air, zinc tends to be oxidized. When zinc oxide is generated on a steel plate waste surface having a distorted shape, there is a problem that powders of zinc oxide are accumulated and the powders cannot be easily removed even if the steel plate waste is sifted or vibrated. Since the sublimation point of zinc oxide is about 1725°C and exceeds the melting point (about 1535°C) of iron, it is difficult for the apparatus to volatilize and remove zinc oxide. Furthermore, slag containing zinc oxide is generated in a large amount on a bath level in the inductive melting furnace. The slag damages the surrounding refractory, or is taken into the refractory to form rising ZnO-SiO₂ mixed oxide adhering to the surface of the refractory to cause a suspended state of materials when the materials is fed. This state may cause abnormal heating of previously fed lower materials.

On the other hand, the vacuum-heating dezincing facility which is effective in respect of zinc removal requires expensive facility cost and must also secure a large installation space. The vacuum-heating dezincing facility also requires maintenance cost for maintaining a degree of vacuum, and tends to cause not only high introduction cost but also high running cost. That is, the vacuum-heating dezincing facility is suitable for intensively performing a dezincing treatment in an exclusive large scale facility. However, the vacuum-heating dezincing facility is unsuitable as a dezincing treatment in a medium or small-scale foundry. The scrap steel plates subjected to the dezincing treatment by high temperature heating in an exclusive facility must be cooled for being conveyed to the foundry by a track or the like. When the scrap steel plates are used as melting materials in the foundry, the scrap steel plates are restored to about room temperature. That is, thermal energy required for the dezincing treatment is completely useless, and the vacuum-heating dezincing facility is a facility having a large loss even in terms of energy efficiency.

The present invention has been made in view of the above-mentioned problems. It is an object of the present invention to provide a space-saving dezincing apparatus and a space-saving dezincing method which enable extremely inexpensive and sure dezincing and can be also introduced into the foundry. It is another object of the present invention to provide a dezincing apparatus and a dezincing method which efficiently use thermal energy required for a dezincing treatment, with less energy loss.

### Solution to Problem

In order to solve the above-mentioned problems, present invention teaches features of independent claims 1 (dezincing apparatus) and 13 (dezincing method). A dezincing apparatus of the present invention includes: a heating container having a feeding port into which a galvanized steel plate is fed; a heating coil wound around an outer periphery of the heating container and connected to a heating power supply; and a rod body disposed (i.e. erected) in the heating container.

Accordingly, since the dezincing apparatus is composed of an extremely simple facility, and the installation area thereof can be also reduced, a space-saving dezincing apparatus can be achieved, of which the introduction cost is more inexpensive than that of the vacuum-heating dezincing facility and which can be also introduced into the foundry. Since the rod body erected in the apparatus has heat to heat the galvanized steel plate from the inside of the apparatus, the dezincing apparatus is realized, which can spread the heat therein to enable uniform heating and attain sure zinc removal. Furthermore, the apparatus can be used as a pretreatment facility for melting the steel plate in the foundry, and the thermal energy required for the dezincing treatment can be also utilized without wasting the thermal energy by directly transferring the heated steel plate to a melting process.

Herein, it is preferable that the rod body be made of a material having an affinity for inductive heating. It is essential that the rod body be hollow, and be provided with a hole drilling part communicating with an interior of the rod body, and the dezincing apparatus further include an exhaust means for discharging a gas in the container to an outside from the hole drilling part through the hollow rod body.

Accordingly, not only the heat generation of the galvanized steel plate itself but also the inductive heating of the rod body in the apparatus are facilitated. The heat is easily spread in the apparatus, and zinc vapor in the apparatus is discharged through the hollow rod body from the hole drilling part of the hollow rod body. The rod body functions as a discharge passage for the zinc vapor.

It is preferable that the dezincing apparatus include a plurality of heating coils, and the heating coils heat respectively at different temperatures. It is more preferable that the heating coil positioned at a lower place among the plurality of heating coils heat at a higher temperature.

Accordingly, the heating temperature of the galvanized steel plate can be gradually set, and the dezincing apparatus is realized, which enables effective heating depending on the state of the galvanized steel plate.

Furthermore, the dezincing apparatus may include a plurality of heating coils, and the heating coils may be respectively energized at different frequencies.

Accordingly, since the heating coils are energized at different frequencies, heating conditions can be set in consideration of temperature rise rate, power consumption and uniforming heat in the apparatus.

It is also preferable that a plurality of hole drilling parts be formed, and at least one of the diameter and number of the hole drilling parts be varied toward the lower part from the upper part of the rod body.

Accordingly, the amount of the zinc vapor to be sucked can be controlled by changing the diameter and number of the hole drilling parts, and the dezincing apparatus is realized, which can set a temperature and a reducing atmosphere depending on a position in the apparatus.

A plurality of rod bodies are erected in the heating container. Accordingly, heating in the apparatus can be further uniformized. The at least one rod body is erected at the central part of the heating container which is far from the heating coil and hardly heats the galvanized steel plate, and the rod body generates heat. Thereby, the heat transmission thereof can facilitate the heating of the surrounding galvanized steel plate to suppress the variation of temperature between the surrounding galvanized steel plate and the galvanized steel plate near the coil.

Herein, the dezincing apparatus further includes a discharge means for discharging the steel plate from which zinc has been removed, by a predetermined amount to the outside of the apparatus, the discharge means provided below the heating container. Thereby, the dezincing apparatus is realized, which enables a batch-continuous dezincing treatment of a scrap steel plate.

Furthermore, the heating container may be a metal container, and may have an inner wall brought into contact with the galvanized steel plate, the inner wall comprising an electrically insulating thermal insulation material. A part of a side surface of the metal container is divided in a longitudinal direction by the electrically insulating thermal insulation material, and thereby, an induced current can be also suppressed from flowing in a circumferential direction.

Accordingly, since the dezincing apparatus prevents melting and deterioration of the heating container caused by local heating, and spark caused by conducting between the inner side of the heating container and the galvanized steel plate, the dezincing apparatus has excellent wear resistance. Furthermore, the dezincing apparatus can also prevent the rapid heating of the metal container.

The dezincing apparatus of the present invention further essentially includes: a first heating chamber for applying heat to the galvanized steel plate; a second heating chamber positioned below the first heating chamber, the second heating chamber having a space for applying heat of a temperature higher than a heating temperature in the first heating chamber to the galvanized steel plate heated in the first heating chamber; and an opening and closing means for closely sectioning the first heating chamber and the second heating chamber and for dropping and moving the galvanized steel plate from the first heating chamber to the second heating chamber, wherein the heating coil is wound around the outer peripheries of the first heating chamber and the second heating chamber, and heats the galvanized steel plate in the first heating chamber and the second heating chamber.

Accordingly, since uniform heat can be applied to the scrap steel plates by gradually applying heat to the galvanized scrap steel plates in the plurality of heating chambers and agitating the scrap steel plates whenever dropping and moving the scrap steel plates in the heating chambers, the dezincing apparatus is realized, which can remove zinc effectively and surely.

Herein, it is preferable that the dezincing apparatus further include a preliminary heating chamber positioned above the first heating chamber, the preliminary heating chamber having a feeding port for feeding the galvanized steel plate and having a space for applying heat of a temperature lower than a heating temperature in the first heating chamber to the fed galvanized steel plate, wherein the opening and closing means closely sections the preliminary heating chamber and the first heating chamber, and drops and moves the galvanized steel plate from the preliminary heating chamber to the first heating chamber.

Accordingly, the scrap steel plates are agitated by further multistage heating and dropping to enable uniform heating.

It is preferable that the dezincing apparatus further include a remaining heat chamber positioned below the second heating chamber and retaining the galvanized steel plate heated in the second heating chamber.

Accordingly, a zinc component remaining in the scrap steel plate can be also surely removed by remaining heat generated by heating plural times.

It is preferable that the dezincing apparatus further include an exhaust pipe connected to the first heating chamber and the second heating chamber. A filter for capturing the zinc component, an induction fan and optionally a cooler are connected to the downstream side of the exhaust pipe. Zinc is captured, and zinc is then exhausted.

Accordingly, since the zinc vapor is sucked and discharged from each of the sealed heating chambers by the exhaust pipe, the dezincing apparatus is realized, which enables the sure discharge of the zinc vapor without leaking the zinc vapor to the outside.

The present invention can be also realized as the following dezincing method. The dezincing method heats a galvanized steel plate to evaporate and remove zinc, the method including the steps of: feeding the galvanized steel plate and a carbon-containing material into a heating container having a feeding port for feeding the galvanized steel plate; evaporating and removing zinc of the fed galvanized steel plate using inductive heating of the galvanized steel plate by a heating coil wound around an outer periphery of the heating container and connected to a heating power supply, and heating caused by heat of a hollow rod body erected in the heating container; reacting the fed carbon-containing material with oxygen in the container to generate a carbon monoxide gas and establishing a reducing atmosphere in the container by the carbon monoxide gas to suppress oxidation of zinc; and discharging the evaporated zinc and the generated carbon monoxide gas to an outside from a hole drilling part formed in the rod body through an inner side of the hollow rod body. As the carbon-containing material, coke, a carburizer, coal and the like are suitable. A carbon rod or the like previously fixed in the heating container may be suitably exchanged according to the degree of consumption of the carbon rod except that the carbon-containing material is fed from the feeding port with the galvanized steel plate.

It is preferable that, as the dezincing method, a gas for controlling the reducing atmosphere be vented into the heating container. It is more preferable that the evaporated zinc and the generated carbon monoxide gas flow in the rod body toward an outside discharging direction.

Accordingly, since the galvanized steel plates are uniformly heated in the apparatus while the reducing atmosphere is maintained in the apparatus to suppress the generation of zinc oxide, effective and sure zinc removal can be realized.

In addition, argon, nitrogen and the like are vented with the heating container filled with the galvanized steel plates to hold an inactive atmosphere, and thereby the generation of zinc oxide can be prevented and zinc can be efficiently removed. Since the addition of the carbon-containing material is not required in this case, the carbon monoxide gas derived from the carbon-containing material is not generated, and the fear of firing is eliminated.

### Advantageous Effects of Invention

In this way, according to the dezincing apparatus and the dezincing method according to the present invention, the dezincing apparatus is composed of the simple facility. Thereby, the dezincing apparatus has the reduced installation area, results in inexpensive cost, and can be easily introduced into the foundry. Since the rod body erected in the heating container plays a role of heating from the inner side toward the outer side of the apparatus, sufficient heat can be applied to the galvanized steel plate fed to the central part of the furnace, and sure zinc removal can be realized.

Furthermore, according to the dezincing apparatus according to the present invention, the scrap steel plates are dropped and moved into each of the plurality of heating chambers sectioned. The scrap steel plates are agitated in each of the heating chambers, and the filling position of the scrap steel plates is changed in each of the heating chambers. Thereby, more uniform heating to the scrap steel plates is enabled, and sure zinc removal can be realized. Since the opening and closing device which drops and moves the scrap steel plates seals each of the heating chambers, the zinc vapor can be induced into the exhaust pipe as the discharge passage for the zinc vapor without leaking the zinc vapor to the outside, and the sure exhaust of the zinc vapor is also enabled.

### Brief Description of Drawings

Fig. 1 schematically shows a dezincing apparatus according to a first embodiment.
Fig. 2 shows an example of a hollow pipe.
Fig. 3 schematically shows a dezincing apparatus according to a second embodiment.
Fig. 4 shows the internal structure of the dezincing apparatus according to the second embodiment.
Fig. 5 schematically shows a dezincing apparatus according to a third embodiment.
Fig. 6 schematically shows another constitution of the dezincing apparatus according to the third embodiment.
Fig. 7 schematically shows a dezincing apparatus according to a fourth embodiment.
Fig. 8 partially shows the internal structure of the dezincing apparatus according to the fourth embodiment.

### Description of Embodiments

Hereinafter, a dezincing apparatus and a dezincing method according to the present invention will be described with reference to the drawings.

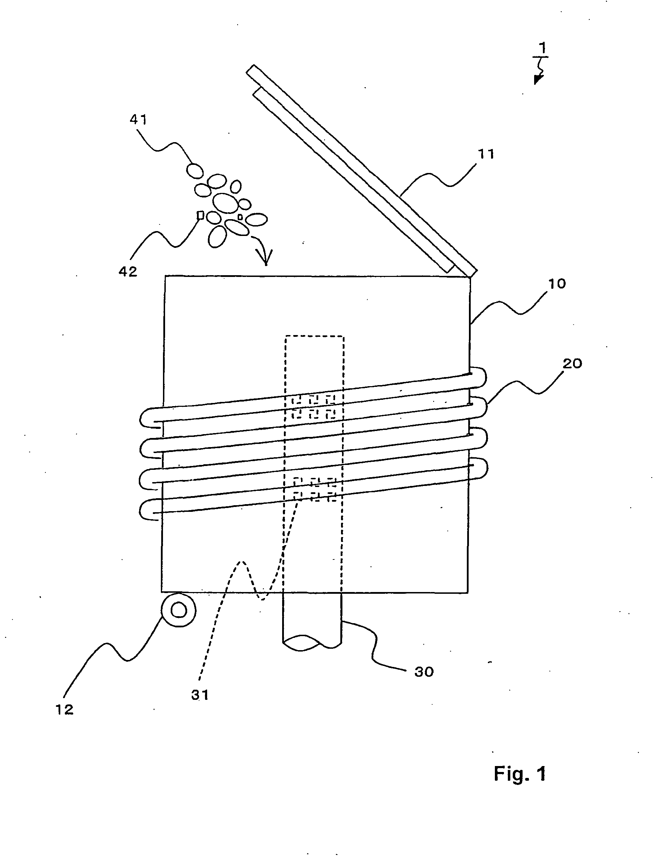

Fig. 1 schematically shows a dezincing apparatus.

A dezincing apparatus 1 is an inductive heating dezincification furnace which heats galvanized steel plates to evaporate zinc. The dezincing apparatus 1 is provided with an inductive heating container 10, an inductive heating coil 20 and a hollow pipe 30.

The inductive heating container 10 is a container for heating scrap steel plates 41. The inductive heating container 10 is provided with a feeding port, at an upper part, for feeding the scrap steel plates 41 and a carbon-containing material 42. The inductive heating container 10 is provided with a container lid 11 for sealing the upper part of the container in order to prevent zinc vapor or the like generated by heat treatment after the feeding from leaking out of the upper part of the container and to prevent zinc oxide from being generated on the scrap steel plates 41 near the feeding port by air entering the apparatus from the feeding port. The inductive heating container 10 is also provided with a tilting mechanism 12 which tilts the container in order to discharge the heated scrap steel plates after the heat treatment.

The inductive heating coil 20 is wound around the outer periphery of the inductive heating container 10 and is connected to an inductive heating power supply (not shown). As the inductive heating power supply, a high-frequency power supply unit of 0.5 to 10 kHz is used. When the inductive heating coil 20 is energized by the inductive heating power supply, the scrap steel plates 41 fed into the inductive heating container 10 from the feeding port is induction-heated. The inductive heating temperature can be controlled by measuring the temperature of the scrap steel plates 41 in an optional position in the inductive heating container 10. Herein, a temperature control meter is used, which enables automatic temperature control according to electric power fixed control or electric current fixed control of the inductive heating power supply. The measured temperature of the scrap steel plates 41 is input into the temperature control meter, and the inductive heating temperature is controlled so as to reach a previously programmed target temperature.

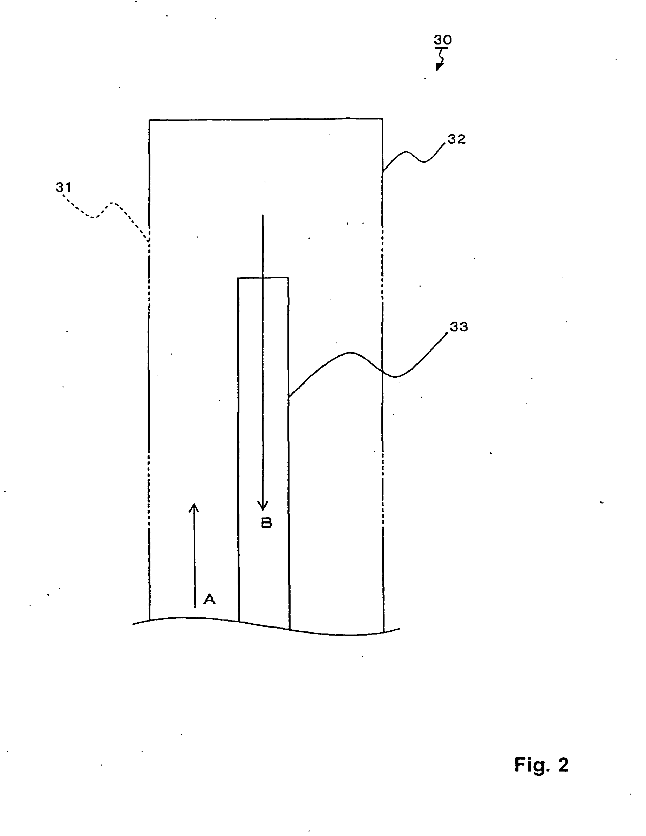

The hollow pipe 30 is a hollow rod body erected in the inductive heating container 10. In the hollow pipe 30, a hole drilling part, that is, slits 31 are formed by boring a hole as the outlet of the zinc vapor. Air in the pipe is sucked from the lower part of the apparatus, and the zinc vapor and dust in the apparatus are discharged to the outside through the inside of the hollow pipe 30 from the slits 31. Herein, as shown in Fig. 2, the hollow pipe 30 may have a structure in which air is sucked and exhausted from an inner pipe 33 as a double pipe composed of an outer pipe 32 and the inner pipe 33. In this case, air flows in from the outer pipe 32 by an amount sucked by the inner pipe 33 (a direction A of Fig. 2). After the air is heated in the pipe, zinc and carbon monoxide are oxidized and discharged in the form of zinc oxide and carbon dioxide from the inner pipe 33 (a direction B of Fig. 2). The hollow pipe 30 is composed of a material easily induction-heated, that is, a material having an affinity for inductive heating. The pipe itself has heat in accordance with rise of the inner temperature of the container. Since the heat transmission of the hollow pipe 30 heats the scrap steel plates 41 near the pipe, the heat transmission can accelerate the heating of the scrap steel plates 41 fed to a place where the heat is hardly reached in the container.

In this way, the dezincing apparatus 1 is composed of an extremely simple facility, and the installation area thereof can be also reduced. Therefore, since the dezincing apparatus 1 achieves introduction cost which is more inexpensive than that of the vacuum-heating dezincing facility, and require no large installation space, the dezincing apparatus 1 can be easily introduced into the foundry or the like, and can be used as a pretreatment facility for melting the steel plates in the foundry. That is, since the processed scrap steel plates which are heated and are discharged from the tilting mechanism 12 can be directly transferred to a melting process, thermal energy (heating by the inductive heating coil 20) required for dezincing treatment can be also utilized without wasting the thermal energy.

Not only the scrap steel plates 41 but also the carbon-containing material 42 are fed into the container, and the apparatus is provided with the container lid 11 which seals the upper part thereof. Thereby, the generation of zinc oxide can be suppressed by establishing a reducing atmosphere in the container.

Furthermore, the hollow pipe 30 erected in the inductive heating container 10 sucks a carbon monoxide gas and a carbon dioxide gas generated by the reaction of carbon of the fed carbon-containing material with oxygen in the container, in addition to an oil content, a water content and zinc vapor to be removed from the scrap steel plates by heat treatment, and discharges the gases to the outside. In addition, since the pipe itself has heat, the pipe can heat the scrap steel plates 41 fed to a place where the heat is hardly reached, from the inside of the container.

Next, an improved dezincing apparatus of a second embodiment which provides more suitable dezincing treatment than that of the above-mentioned dezincing apparatus will be described.

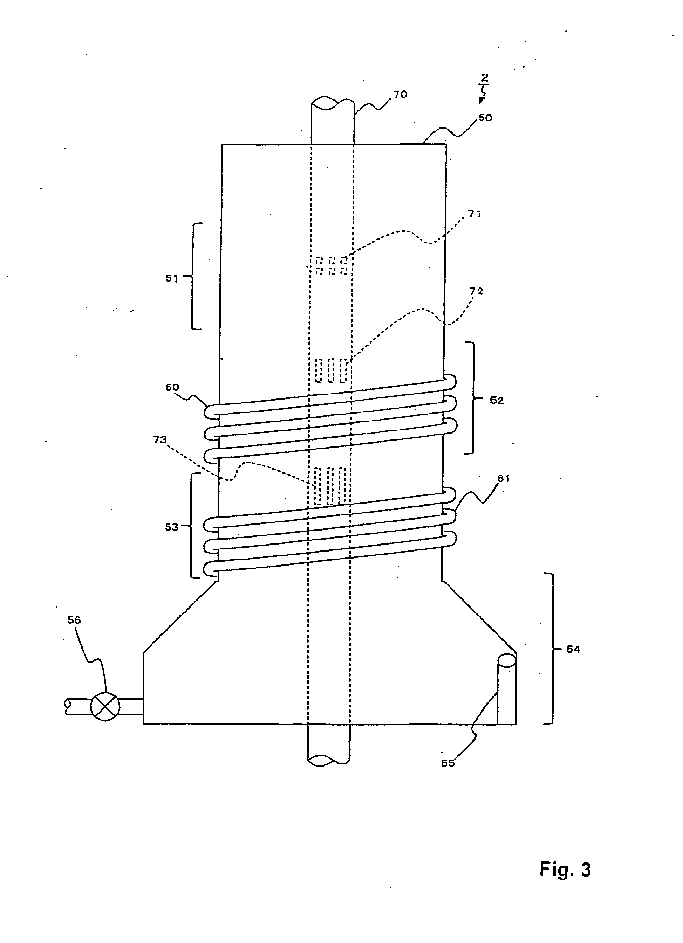

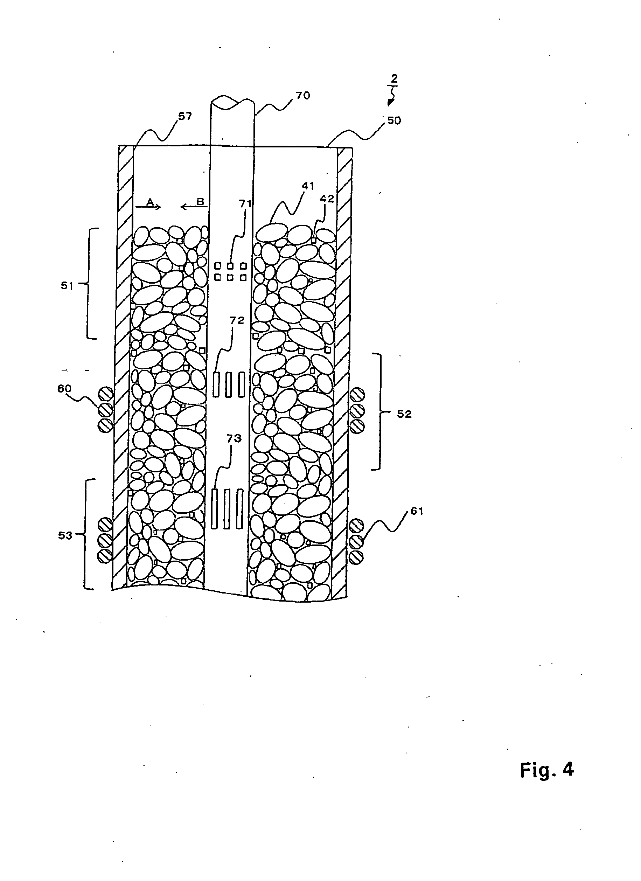

Fig. 3 schematically shows the dezincing apparatus according to the second embodiment. Fig. 4 shows the internal structure thereof.

A dezincing apparatus 2 is provided with an inductive heating container 50, inductive heating coils 60, 61, and a hollow pipe 70 as in the above-mentioned dezincing apparatus 1.

The inductive heating container 50 is common to the above-mentioned inductive heating container 10 in that the inductive heating container 50 is a container for heating scrap steel plates 41 and is provided with a feeding port, at an upper part, for feeding the scrap steel plates 41, and the inductive heating container 50 is the outer container of the dezincing apparatus 2. However, the inductive heating container 50 is different from the above-mentioned inductive heating container 10 in that the inductive heating container 50 is divided into a preheating part 51, a first heating part 52, a second heating part 53 and a controlling part 54 in order from the top.

The preheating part 51 is a tank for heating the scrap steel plates 41 using heat transmitted from the first heating part 52 positioned therebelow. A water content, an oil content and the like contained in the scrap steel plates 41 are removed by heat of a temperature of about 500°C or less in the preheating part 51.

The first heating part 52 heats the scrap steel plates 41 using inductive heating generated by the inductive heating coil 60 wound around the outer periphery of the first heating part 52. In the first heating part 52, zinc contained in the scrap steel plates 41 is removed by heat of a temperature of about 500°C to 900°C.

The second heating part 53 heats the scrap steel plates 41 using inductive heating generated by the inductive heating coil 61 wound around the outer periphery of the second heating part 53. In the second heating part 53, zinc in the scrap steel plates 41 which were not removed in the first heating part 52, for example, zinc or the like melted and dropped is removed by heat of a temperature of about 900°C to 1100°C.

The controlling part 54 holds and cools the scrap steel plates 41 after heat treatment, and controls the atmosphere of the apparatus. After the scrap steel plates 41 from which zinc was removed is held and cooled in the controlling part 54 for a fixed time, the scrap steel plates 41 are discharged by a predetermined amount to the outside of the apparatus from a discharging part 55 by a pusher or the like. The controlling part 54 is provided with an air passing control valve 56, which takes in gases such as an inactive gas and air so as to control a carbon monoxide gas concentration, and a reducing or inactive atmosphere of the apparatus.

The scrap steel plates 41 are fed into the inductive heating container 50 thus constituted to be subjected to heat treatment. At this time, a carbon-containing material 42 is also fed with the scrap steel plates 41 into the container. The generation of zinc oxide can be reduced by feeding the carbon-containing material 42 into the container to establish a reducing atmosphere in the container. That is, since carbon reacts with oxygen in the container to be a carbon monoxide gas and a carbon dioxide gas, which are discharged to the outside through the hollow pipe 70 to be described later, a low oxygen state is established in the container, and can prevent the oxidization of melted zinc. Since air is taken in from the air passing control valve 56 of the controlling part 54, oxygen is made into the carbon monoxide gas or the like, which is discharged, in order of the second heating part 53 and the first heating part 52 positioned at a lower place. As going toward the upper side of the container, low oxygen, that is, the reducing atmosphere is increased.

Herein, ceramics such as magnesia may be used for the material of the inductive heating container 50, or a metal container made of stainless steel (for example, SUS310) or the like may be used for the inductive heating container 50. The metal container is more excellent in abrasion resistance than ceramics, and is advantageous in respect of operation maintenance. However, the metal container leads to fears of melting and deterioration caused by local heating, and generation of spark caused by conducting between the inner side of the heating container and the scrap steel plates 41. Therefore, an electrically insulating thermal insulation material 57 (for example, mica or the like) is preferably provided as the inner wall of the container in order to prevent the melting, the deterioration and the generation of spark.

The inductive heating coils 60, 61 are wound around the outer periphery of the inductive heating container 50, and are connected to an inductive heating power supply (not shown). When electricity is passed through the inductive heating coils 60, 61 from the inductive heating power supply using a high-frequency power supply of 0.5 to 10 kHz as the inductive heating power supply, the scrap steel plates 41 fed into the inductive heating container 50 from the feeding port are induction-heated.

When the frequency of the energization is higher in the case where the inductive heating coil is energized, the rising rate to a target temperature is more excellent, and total electric power consumption tends to be also reduced. Inversely, when the frequency is lower, uniforming heat in the apparatus tends to be attained. The heating of the first heating part 52 requires the rapid rising of temperature in order to prevent zinc contained in the scrap steel plates 41 in the apparatus from being melted and dropped downward, and to enable the discharge of zinc as zinc vapor out of the apparatus as soon as possible. While the heating of the second heating part 53 requires the sure removal of the remaining zinc, uniforming heat in the apparatus is important in order to prevent the melt sticking of iron by local heating. In view of the above, the frequency of the inductive heating coil 61 wound around the second heating part 53 is preferably equal to or less than that of the inductive heating coil 60 wound around the first heating part 52. Specifically, the frequency of the electricity passed through the inductive heating coil 60 is preferably set to 1 to 10 kHz, and the frequency of the electricity passed through the inductive heating coil 61 is preferably set to 0.5 to 5 kHz.

The hollow pipe 70 is a hollow rod body erected at the center of the inductive heating container 50. The hollow pipe 70 has a hole drilling part formed by boring a hole as the outlet of the zinc vapor. The hollow pipe 70 projects from the lower part of the apparatus, and allows air or the like to flow to the upward direction. The hollow pipe 70 sucks air in the pipe from above the apparatus, and discharges the zinc vapor to the outside. Thisembodiment shows an example having slits 71 formed at a position corresponding to the preheating part 51, slits 72 formed at a position corresponding to the first heating part 52, and slits 73 formed at a position corresponding to the second heating part 53, as a hole drilling part. The diameters of the slits 71, 72 and 73 are sequentially increased from the upward direction of the apparatus in consideration of an increase in the generation amount of the zinc vapor as going toward the lower side of the apparatus to increase the sucking amount of the zinc vapor in the apparatus as going toward the lower side of the apparatus. The shape of the hole drilling part is not limited to a vertically long slit shape. A plurality of circular holes may be formed. Only the number of the holes may be increased without increasing the diameter from the upward direction to the downward direction, or the diameter may be reduced to increase the number thereof.

The hollow pipe 70 is composed of a material having an affinity for inductive heating, for example, alloy steel (stainless steel, heat-resistant steel or the like) as in the case of the above-mentioned dezincing apparatus 1. The pipe itself is also heated as the inner temperature of the container rises. Since the heat transmission of the pipe having heat of 800°C or more heats the scrap steel plates 41 in the container from the inner side of the container, the pipe accelerates the heating of the scrap steel plates fed to the central part of the container hardly induction-heated, to contribute to the enhancement in the whole temperature rise rate of the steel plates in the apparatus. Examples of stainless steel used as the hollow pipe 70 include austenitic stainless steel (SUS310), austenitic-ferrite two-phase stainless steel (SUS329), and ferrite stainless steel (SUS430). When a temperature sensor is provided on the hollow pipe 70 erected at the center of the inductive heating container 50, not only a temperature at a place near the outer periphery of the inductive heating container 50 but also a temperature at a place near the center of the container can be also measured. The inner temperature of the container can be controlled by the adjustment of the sucking amount of the zinc vapor based on a temperature measured value at the place near the center of the container, or the like, and the uniforming heat in the container can be also attained.

The dezincing treatment procedure of the scrap steel plates in the dezincing apparatus 2 thus constituted is as follows.

First, the galvanized scrap steel plates 41 and the carbon-containing material 42 are fed into the inductive heating container 50.

In the preheating part 51, a water content, an oil content and the like are removed from the fed scrap steel plates 41 by the heat transmitted from the first heating part 52 positioned therebelow and the heat of the hollow pipe 70 having heat. The removed water content or the like is discharged out of the apparatus from the slits 71 of the hollow pipe 70. Since the previously fed carbon-containing material reacts with oxygen in the first heating part 52 and the second heating part 53 which are positioned below the preheating part 51, an extremely strong reducing atmosphere is established in the preheating part 51 to hardly generate zinc oxide. Since the temperature of the preheating part 51 is reduced as being distant from the inductive heating coil 60, and an internal temperature at a place near the feeding port is reduced, an oil content or vapor of the scrap steel plates 41 near the feeding port are not emitted from the feeding port. Even if the oil content or the vapor contacts with air, the possibility of firing is eliminated and the safety is maintained.

When the processed scrap steel plates are discharged out of the apparatus from the discharging part 55; the scrap steel plates 41 from which the water content and the oil content were removed in the preheating part 51 are dropped and moved into the first heating part 52 where heat treatment takes place. In the first heating part 52, the scrap steel plates 41 are heated to a temperature of about 500 to 900°C under a reducing atmosphere mainly containing a carbon monoxide gas generated by the reaction of carbon-containing materials such as a carburizer, coke, coal and carbon electrode waste with oxygen by inductive heating from the inductive heating coil 60, and heat of the hollow pipe 70 having heat. Thereby, the zinc vapor is generated, and is discharged out of the apparatus from the slits 72 of the hollow pipe 70. Since the previously fed carbon-containing material reacts with oxygen in the second heating part 53 positioned below the first heating part 52, a strong reducing atmosphere is maintained in the first heating part 52.

When the scrap steel plates processed as in the above are discharged after the heat treatment in the first heating part 52, the scrap steel plates 41 are dropped and moved into the second heating part 53 where heat treatment takes place. In the second heating part 53, the scrap steel plates 41 are heated to a temperature of about 900 to 1100°C by inductive heating from the inductive heating coil 61 and heat of the hollow pipe 70 having heat. Thereby, an iron-zinc alloy or the like is formed to reduce a vapor pressure, and the remaining zinc component which could not be removed in the first heating part 52 is volatilized and removed. The heating temperature of the second heating part 53 is high. Therefore, even when the zinc component is dropped into the second heating part 53 as melted zinc without being volatilized in the first heating part 52, the zinc component can be volatilized in the second heating part 53, and can be discharged out of the apparatus from the slits 73 of the hollow pipe 70 as the zinc vapor.

The scrap steel plates 41 from which zinc was removed in the second heating part 53 are then held and cooled in the controlling part 54. The scrap steel plates 41 are then discharged by a predetermined amount out of the apparatus from the discharging part 55.

Batch-continuous dezincing treatment of the scrap steel plates is performed in such a procedure to enable extremely inexpensive and sure dezincification.

As described above, the dezincing apparatus of the embodiment is a simple facility constituted by the heating container, the pipe as the hollow rod body erected at the center of the heating container, the heating coil wound around the heating container, and the high-frequency power supply for energizing the heating coil, or the like. Therefore, since the dezincing apparatus achieves extremely inexpensive cost and a small installation area as compared with the vacuum-heating dezincing facility, the dezincing apparatus can be also easily introduced into the foundry as the space-saving dezincing apparatus. Since the generation of zinc oxide is prevented if possible by establishing the reducing atmosphere in the apparatus, the sure removal of zinc can be realized at a temperature at which the scrap steel plates themselves are not melted. In the dezincing apparatus of the embodiment, the rod body erected at the central part of the apparatus functions as a discharge passage for the zinc vapor, and heats the scrap steel plates from the center of the apparatus. That is, the heat can be spread to the scrap steel plates 41 fed to a place near the central part of the container by heating from the outer side of the inductive heating container 50 by the inductive heating coils 60, 61 (a direction A of Fig. 4), and heating from the inner side of the apparatus by the hollow pipe 70 (a direction B of Fig. 4).Therefore, the sure removal of zinc can be attained. Particularly, the hollow pipe 70 is disposed at the central part of the container which tends to become a low temperature. Therefore, since the scrap steel plates 41 are not retained at the central part, and the scrap steel plates 41 are heated by the heating from the hollow pipe 70, the rapid rising of temperature and the uniforming heat in the heating container can be realized. Since the hollow pipe 70 as the discharge passage for the zinc vapor is heated, and the zinc vapor does not adhere to the inner surface of the pipe, the dezincing apparatus having excellent maintenance cost can be realized. Since not only the temperature near the outer periphery of the container but also the temperature of the central part of the container can be also measured by using the pipe erected at the central part of the container, the inner temperature of the container can be also controlled. In the embodiment, the inductive heating temperature is controlled to a target temperature so that predetermined zinc removal can be attained by inputting the temperature of the scrap steel plates 41 positioned at the middle near the hollow pipe 70 into a temperature control meter, and using the electric power fixed control method of the inductive heating power supply.

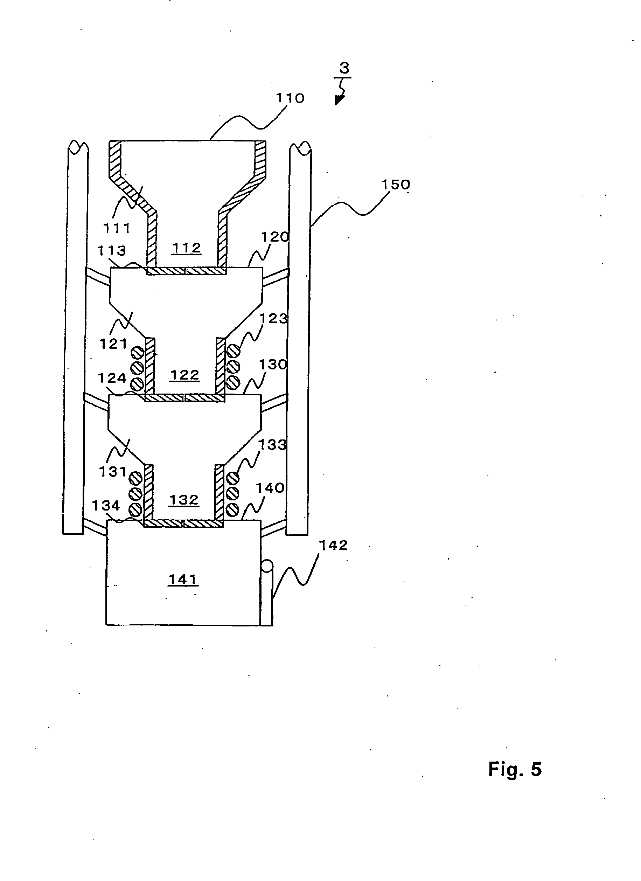

Then, a dezincing apparatus of a third embodiment will be described. Fig. 5 schematically shows the dezincing apparatus according to the third embodiment.

A dezincing apparatus 3 of the embodiment is provided with a preliminary heating tank 110, a preheating tank 120, a heating tank 130, a remaining heat tank 140 and an exhaust pipe 150.

The preliminary heating tank 110 is provided with a storing chamber 111 provided with a feeding port for feeding scrap steel plates, at an upper part, and storing the scrap steel plates fed into the apparatus, a preliminary heating chamber 112 for preliminarily heating the scrap steel plates, and a double-hinged damper 113 as an opening and closing device sectioning the preliminary heating tank 110 and the preheating tank 120. Preliminary heating in the preliminary heating chamber 112 is heating by heat of a temperature of 500°C or less transmitted from the preheating tank 120 positioned below the preliminary heating chamber 112. A water content, an oil content and the like contained in the scrap steel plates are removed by this heating.

The preheating tank 120 is a tank having a space for heating the scrap steel plates preliminarily heated in the preliminary heating chamber 112. The preheating tank 120 is provided with a storing chamber 121 for storing the scrap steel plates sent into by opening the damper 113, a preheating chamber 122 for applying preheat to the scrap steel plates, an inductive heating coil 123 wound around the outer periphery of the preheating chamber 122, and a double-hinged damper 124 sectioning the preheating tank 120 and the heating tank 130. The inductive heating coil 123 is connected to an inductive heating power supply (not shown). The scrap steel plates in the preheating chamber 122 are induction-heated by a current from the inductive heating power supply. Preheating in the preheating chamber 122 is first heating by heat of a temperature of 500 to 900°C by the inductive heating coil 123. In this regard, the preheating chamber 122 can be referred to as a first heating chamber. The zinc plating of the scrap steel plates are melted by this heating. The zinc plating vaporizes partially to become zinc vapor, and the zinc vapor is removed. The heat is transmitted to the preliminary heating chamber 112 positioned above the preheating tank 120, and is used also as preliminary heating. An air atmosphere may be established in the preheating tank 120. However, in order to prevent the oxidation of zinc to accelerate the vaporization of zinc, an inactive atmosphere obtained by making nitrogen, argon or the like flow in, or a reducing atmosphere containing carbon monoxide or the like may be established in the preheating tank 120.

The heating tank 130 is a tank having a space for heating the scrap steel plates to which preheat was applied in the preheating chamber 122. The heating tank 130 is provided with a storing chamber 131 for storing the scrap steel plates sent into by opening the damper 124, a heating chamber 132 for applying main heating to the scrap steel plates, an inductive heating coil 133 wound around the outer periphery of the heating chamber 132, and a double-hinged damper 134 sectioning the heating tank 130 and the remaining heat tank 140. The inductive heating coil 133 induction-heats the scrap steel plates in the heating chamber 132 using a current from the inductive heating power supply as in the heating coil 122. The main heating in the heating chamber 132 is second heating by heat of a temperature of 900 to 1100°C by the inductive heating coil 133. In this regard, the heating chamber 132 can be referred to as a second heating chamber. The zinc plating of the scrap steel plates which could not be previously removed in the preheating chamber 122 is melted by this heating. The zinc plating vaporizes partially to become zinc vapor, and the zinc vapor is removed. An air atmosphere may be established in the heating tank 130. However, in order to prevent the oxidation of zinc to accelerate the vaporization of zinc, an inactive atmosphere obtained by making nitrogen, argon or the like flow in, or a reducing atmosphere containing carbon monoxide or the like may be established in the heating tank 130.

The remaining heat tank 140 is a tank which removes zinc from the scrap steel plates to which the main heating was applied in the heating chamber 132, using the remaining heat of the scrap steel plates, and which has a space for cooling a driving part of the apparatus in order to suppress the driving part from being damaged at a high temperature. The remaining heat tank 140 is provided with a remaining heat chamber 141 for storing the scrap steel plates sent into by opening the damper 134 and removing the remaining zinc component using the remaining heat of the scrap steel plates, and a discharging part 142 discharging the scrap steel plates from which zinc was removed, out of the apparatus.

The exhaust pipe 150 is a pipe for sucking air in the pipe and discharging the zinc vapor to the outside, and is connected to the preheating tank 120, the heating tank 130 and the remaining heat tank 140. The exhaust pipe 150 functions as a discharge passage for the zinc vapor generated in each of these tanks. A filter for capturing the zinc component, a sucking fan and optionally a cooler are connected to the downstream side of the exhaust pipe 150. After zinc is captured, zinc is discharged to the outside.

The dezincing treatment procedure of the scrap steel plates in the dezincing apparatus 3 thus constituted is as follows.

The scrap steel plates fed to the preliminary heating tank 110 are retained in the storing chamber 111. When the previously fed scrap steel plates are sent into the preheating tank 120, the scrap steel plates of the storing chamber 111 are sequentially dropped into the preliminary heating chamber 112. The water content, the oil content and the like are removed from the scrap steel plates preliminarily heated in the preliminary heating chamber 112. The scrap steel plates are sent into the preheating tank 120 by opening the damper 113. The removed water content, oil content and the like are discharged in the form of vapor or the like to the outside through the exhaust pipe 150.

The scrap steel plates sent into the preheating tank 120 are retained in the storing chamber 121. Even here, when the previously fed scrap steel plates are moved into the heating tank 130, the scrap steel plates of the storing chamber 121 are sequentially dropped into the preheating chamber 122. Since the scrap steel plates are agitated by the dropping and moving of the scrap steel plates, heat is uniformly applied to the scrap steel plates in the chamber. Zinc is removed from the scrap steel plates preheated in the preheating chamber 122, and the scrap steel plates are sent into the heating tank 130 by opening the damper 124. Zinc removed by preheating in the preheating chamber 122 is discharged in the form of the zinc vapor to the outside through the exhaust pipe 150. Since the preheating tank 120 and the preliminary heating tank 110 are now sealed by the damper 113, the zinc vapor is hardly leaked to the outside.

Then, the scrap steel plates sent into the heating tank 130 are retained in the storing chamber 131. Similarly, when the previously fed scrap steel plates are moved into the remaining heat tank 140, the scrap steel plates of the storing chamber 131 are sequentially dropped into the heating chamber 132. At this moment, the scrap steel plates are agitated. In this agitating, zinc is removed from the scrap steel plates from which zinc could not be previously removed in the preheating chamber 122, by main heating in the heating chamber 132. The scrap steel plates from which zinc was removed are sent into the remaining heat tank 140 by opening the damper 134. The removed zinc is discharged in the form of the zinc vapor through the exhaust pipe 150. Then, the damper 124 seals the heating tank 130 and the preheating tank 120 to prevent the zinc vapor from being leaked to the outside.

When the scrap steel plates are sent into the remaining heat tank 140, the scrap steel plates are retained in the remaining heat chamber 141. The remaining zinc component is removed from the scrap steel plates by the remaining heat generated by the main heating in the heating chamber 132. Since the scrap steel plates are agitated by the dropping and moving of the scrap steel plates into the remaining heat tank 140 to uniformly apply remaining heat to the scrap steel plates, the remaining zinc component can be surely removed as the zinc vapor. Since the damper 134 seals the remaining heat tank 140 and the heating tank 130, the zinc vapor is discharged from the exhaust pipe 150, and is not leaked to the outside. After the scrap steel plates are retained in the remaining heat chamber 141 for a determined time, the scrap steel plates from which zinc was removed are pushed out by a pusher or the like to be discharged from the discharging part 142 to the outside.

As described above, since the batch-continuous dezincing apparatus of the embodiment has the plurality of sectioned spaces for heating the scrap steel plates, the apparatus having excellent dezincing efficiency can be realized. Since the scrap steel plates are dropped and moved, the scrap steel plates are agitated in each of the heating spaces. Since this agitating effect enables the uniform heating of the scrap steel plates, sure zinc removal can be realized. Since the opening and closing device which drops and moves the scrap steel plates closely sections each the heating spaces, the zinc vapor is discharged from the exhaust pipe installed in the lateral side without leaking the zinc vapor to the outside, and the sure exhaust of the zinc vapor is enabled.

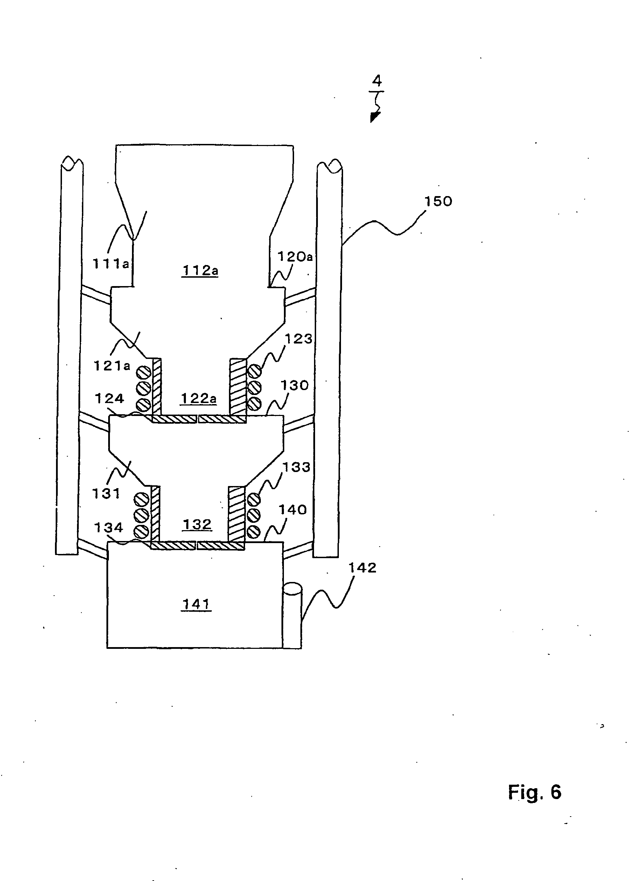

The preliminary heating uses the heat transmitted from the preheating tank positioned at a lower place in the embodiment. Thereby, as shown in Fig. 6, a dezincing apparatus 4 may have a constitution obtained by integrating the preliminary heating tank with the preheating tank without closely sectioning the preliminary heating tank and the preheating tank. The preliminary heating and the preheating are applied in the preheating tank. In contrast, the heat may be applied by not using the heat from the preheating tank in the preheating but by winding the heating coil around the outer periphery of the preliminary heating chamber.

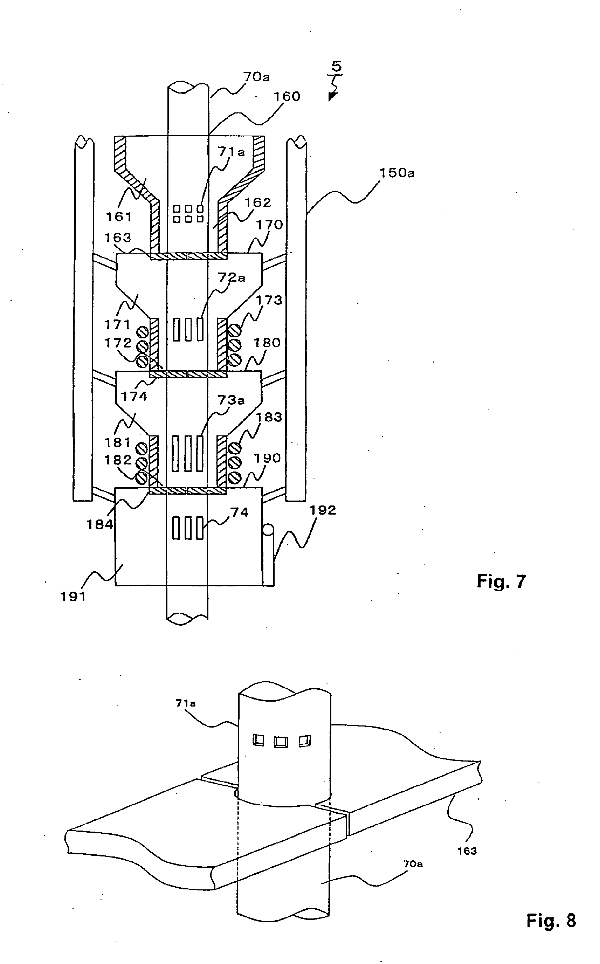

Furthermore, subsequently, a dezincing apparatus of a fourth embodiment will be described. Fig. 7 schematically shows the dezincing apparatus according to the fourth embodiment.

A dezincing apparatus 5 of the embodiment is provided with a preliminary heating tank 160, a preheating tank 170, a heating tank 180, a remaining heat tank 190, an exhaust pipe 150a, and a hollow pipe 70a. That is, the dezincing apparatus 5 has a constitution obtained by combining the dezincing apparatuses of the first to third embodiments described above. Therefore, the contents overlapping those of the above-mentioned embodiments will be simply described.

The preliminary heating tank 160 is provided with a storing chamber 161 for storing scrap steel plates, a preliminary heating chamber 162 for preliminarily heating the scrap steel plates, and a double-hinged damper 163 as an opening and closing device sectioning the preliminary heating tank 160 and the preheating tank 170. Preliminary heating in the preliminary heating chamber 162 is heating by heat of a temperature of 500°C or less transmitted from the preheating tank 170 positioned below the preliminary heating chamber 162. A water content, an oil content and the like contained in the scrap steel plates are removed by this heating.

The preheating tank 170 is provided with a storing chamber 171 for storing the scrap steel plates sent into from the preliminary heating tank 160, a preheating chamber 172 for applying preheat to the scrap steel plates, an inductive heating coil 173, and a double-hinged damper 174 sectioning the preheating tank 170 and the heating tank 180. Preheating in the preheating chamber 172 is first heating by heat of a temperature of 500 to 900°C by the inductive heating coil 173. The zinc plating of the scrap steel plates is melted by this heating. The zinc plating vaporizes partially to become zinc vapor, and the zinc vapor is removed. The heat is transmitted to the preheating chamber 172 positioned above the heating tank 180, and is used also as preheating.

The heating tank 180 is provided with a storing chamber 181 for storing the scrap steel plates sent into from the preheating tank 170, a heating chamber 182 for applying main heating to the scrap steel plates, an inductive heating coil 183, and a double-hinged damper 184 sectioning the heating tank 180 and the remaining heat tank 190. The main heating in the heating chamber 182 is second heating by heat of a temperature of 900 to 1100°C by the inductive heating coil 183. The zinc plating of the scrap steel plates which could not be previously removed in the heating chamber 182 is melted by this heating. The zinc plating vaporizes to become zinc vapor, and the zinc vapor is removed.

The remaining heat tank 190 is provided with a remaining heat chamber 191 for storing the scrap steel plates sent into from the heating tank 180 and removing the remaining zinc component using the remaining heat of the scrap steel plates, and a discharging part 192 discharging the scrap steel plates from which zinc was removed, out of the apparatus.

The exhaust pipe 150a is connected to the preheating tank 170, the heating tank 180 and the remaining heat tank 190, and functions as a discharge passage for the zinc vapor generated in each of these tanks. A filter for capturing the zinc component, a sucking fan and optionally a cooler are connected to the downstream side of the exhaust pipe 150a. After zinc is captured, zinc is discharged to the outside.

The hollow pipe 70a is a hollow rod body erected at the center in the apparatus. The hollow pipe 70a is composed of a material having an affinity for inductive heating, for example, alloy steel (stainless steel, heat-resistant steel or the like) . The pipe itself is also heated as the inner temperature of the container rises. Since the heat transmission of the pipe having heat of 800°C or more heats the scrap steel plates in the container from the inner side of the container, the pipe accelerates the heating of the scrap steel plates fed to the central part of the container hardly induction-heated, to contribute to the enhancement in the whole temperature rise rate of the steel plates in the apparatus.

The hollow pipe 70a has a hole drilling part formed as the outlet of the zinc vapor, and the zinc vapor is discharged from the hole drilling part to the outside. This embodiment shows an example having slits 71a formed at a position corresponding to the preliminary heating tank 160, slits 72a formed at a position corresponding to the preheating tank 170, slits 73a formed at a position corresponding to the heating tank 180, and slits 74 formed at a position corresponding to the remaining heat tank 190, as the hole drilling part. The diameter of each of the slits 73a is set larger than that of each of another slits, and the diameter of each of the slits 72a is set next large in consideration of the largest generation amount of the zinc vapor in the heating tank 180 and the second large generation amount of the zinc vapor in the preheating tank 170. The sucking amount of the zinc vapor in the apparatus is increased in order of the heating tank 180 and the preheating tank 170.

As shown in Fig. 8, a space is formed in the dampers 163, 174, 184 which section each of the tanks, and is suited to a pipe diameter for allowing the hollow pipe 70a to penetrate the inside of the apparatus.

The dezincing treatment procedure of the scrap steel plates in the dezincing apparatus 5 thus constituted is the same as that of the dezincing apparatus 3 of the third embodiment described above. However, since the hollow pipe 70a having heat heats the scrap steel plates from the inner side of each of the tanks, and can spread heat to the scrap steel plates positioned near the central part in each of the tanks, the sure removal zinc is enabled. Since the zinc vapor generated in each of the tanks is discharged not only from the exhaust pipe 150a but also from the slits 71a, 72a, 73a, 74 provided in the hollow pipe 70a, the zinc vapor generated in the inner side of each of the tanks is efficiently discharged, and the sure exhaust of the zinc vapor can be realized.

As described above, according to the dezincing apparatus of the embodiment, the batch-continuous dezincing apparatus having the plurality of sectioned spaces for heating the scrap steel plates and having excellent dezincing efficiency can be realized. Since the scrap steel plates are dropped and moved, the scrap steel plates are agitated in each of the heating spaces. Since this agitating effect enables the uniform heating to the scrap steel plates, sure zinc removal can be realized. Furthermore, the scrap steel plates are not retained at the central part by disposing the hollow pipe 70a at the central part in each of the tanks of which the temperature tends to becomes lower, and the scrap steel plates are heated by heating from the hollow pipe 70a. Thereby, the rapid rising of temperature and the uniforming heat in the heating container can be also realized. Since the opening and closing device which drops and moves the scrap steel plates closely sections each of the heating spaces, the zinc vapor is discharged from the exhaust pipe 150a installed in the lateral side and the hollow pipe 70a erected in the apparatus without leaking the zinc vapor to the outside. Thereby, the sure exhaust of the zinc vapor is enabled. Since the hollow pipe 70a as the discharge passage for the zinc vapor is heated, and the zinc vapor does not adhere to the inner surface of the pipe, the dezincing apparatus having excellentmaintenance cost can be realized.

Although the dezincing apparatus and the dezincing method according to the present invention are described based on each of the embodiments, as described above, the present invention is not limited to the embodiments. Various design variations can be made to attain the object of the present invention without departing the spirit and scope of the present invention. The present invention encompasses all the design variations.

For example, one hollow pipe is erected at the center of the container or the apparatus in the above-mentioned embodiments. However, the hollow pipe may not be erected at the center of the container or the apparatus as long as the hollow pipe is erected in the container or the apparatus. A plurality of pipes may be erected.

Although the hollow pipe is made of alloy steel in the above-mentioned embodiments, the hollow pipe is not limited to the hollow pipe made of alloy steel as long as the hollow pipe can be induction-heated. Iron and carbon steel, silicon carbide and carbon, and the like containing no alloy element may be used.

Furthermore, only the rapid rising of temperature and the uniforming heat in the container or the apparatus can be realized by erecting the pipe which has the formed slits and is not hollow. The zinc vapor or the like in the container or the apparatus can be exhausted from an opening part formed in the upper part of the container, or the zinc vapor or the like can be exhausted from a side exhaust pipe.

In the third and fourth embodiments, the double-hinged damper is used as the opening and closing means. However, another opening and closing means such as a sliding door may be used as long as the opening and closing means closely sections each of the tanks.

The heating coils wound around the outer peripheries of the preheating tank and the heating tank may be respectively connected to different inductive heating power supplies. The heating coil connected to one inductive heating power supply may be wound around the outer peripheries of both the tanks. As shown in each of the above-mentioned embodiments, the heating temperature can be controlled for each of the tanks by separating the heating coil wound around the outer periphery of the preheating tank from the heating coil wound around the outer periphery of the heating tank.

### Industrial Applicability

The dezincing apparatus according to the present invention is suitable as the apparatus for removing zinc in the galvanized scrap steel plates.

### Reference Signs List

1, 2, 3, 4, 5: dezincing apparatus
10, 50: inductive heating container
11: container lid
12: tilting mechanism
20, 60, 61, 123, 133, 173, 183: inductive heating coil
30, 70, 70a: hollow pipe
31, 71, 71a, 72, 72a, 73, 73a, 74: slit
32: outer pipe
33: inner pipe
41: scrap steel plate
42: carbon-containing material
51: preheating part
52: first heating part
53: second heating part
54: controlling part
55, 142, 192: discharging part
56: air passing control valve
57: electrically insulating thermal insulation material
110, 160: preliminary heating tank
111, 111a, 121, 121a, 131, 161, 171, 181: storing chamber
112, 112a, 162: preliminary heating chamber
113, 124, 134, 163, 174, 184: damper
120, 120a, 170: preheating tank
122, 172: preheating chamber
130, 180:' heating tank
132, 182: heating chamber
140, 190: remaining heat tank
141, 191: remaining heat chamber
150, 150a: exhaust pipe

## Claims

1. A dezincing apparatus (1) comprising:
a) a heating container (10) having a feeding port for feeding a galvanized steel plate (41);
b) a heating coil (20) wound around an outer periphery of the heating container and connected to a heating power supply;
c) at least one rod body disposed in the heating container, wherein the rod body is hollow, and is provided with a hole drilling part, communicating with an interior of the rod body (30), (70);
d) an exhaust means (150) for discharging a gas in the container from the hole drilling part to an outside through the hollow rod body.
e) a discharge means (55) for discharging the steel plate from which zinc has been removed, by a predetermined amount to the outside of the apparatus,
**characterized in that**
the discharge means (55) is provided below the heating container (10); and
the dezincing apparatus further comprising:
f) a first heating chamber (52) for applying heat to the galvanized steel plate;
g) a second heating (53) chamber positioned below the first heating chamber, the second heating chamber having a space for applying heat of a temperature higher than a heating temperature in the first heating chamber to the galvanized steel plate heated in the first heating chamber; and
h) an opening and closing means (113) for closely sectioning the first heating chamber and the second heating chamber and for dropping and moving the galvanized steel plate from the first heating chamber to the second heating chamber,
wherein the heating coil (60, 61) is wound around the outer peripheries of the first heating chamber (52) and the second heating chamber (53), and heats the galvanized steel plate in the first heating chamber and the second heating chamber.

2. The dezincing apparatus according to claim 1, wherein the rodbody comprises a material having an affinity for inductive heating.

3. The dezincing apparatus according to claim 1, wherein the dezincing apparatus comprises a plurality of heating coils, and the heating coils heat respectively at different temperatures.

4. The dezincing apparatus according to claim 3, wherein the heating coil positioned at a lower place among the plurality of heating coils heats at a higher temperature.

5. The dezincing apparatus according to claim 1, wherein the dezincing apparatus comprises a plurality of heating coils, and the heating coils are respectively energized at different frequencies.

6. The dezincing apparatus according to claim 1, wherein a plurality of hole drilling parts are formed; and the diameter and/or the number of the hole drilling parts is varied from the upper part toward the lower part of the rod body.

7. The dezincing apparatus according to claim 1, wherein a plurality of rod bodies are disposed in the heating container.

8. The dezincing apparatus according to claim 1, wherein the at least one rod body is disposed at the center of the heating container.

9. The dezincing apparatus according to claim 1, wherein the heating container is a metal container, and has an inner wall brought into contact with the galvanized steel plate, the inner wall comprising an electrically insulating thermal insulation material.

10. The dezincing apparatus according to claim 1, further comprising a preliminary heating chamber positioned above the first heating chamber, the preliminary heating chamber having a feeding port for feeding the galvanized steel plate is fed and having a space for applying heat of a temperature lower than a heating temperature in the first heating chamber to the fed galvanized steel plate,
wherein the opening and closing means closely sections the preliminary heating chamber and the first heating chamber, and drops and moves the galvanized steel plate from the preliminary heating chamber to the first heating chamber.

11. The dezincing apparatus according to claim 1, further comprising a remaining heat chamber positioned below the second heating chamber and retaining the galvanized steel plate heated in the second heating chamber.

12. The dezincing apparatus according to claim 11, further comprising an exhaust pipe connected to at least any one of the preliminary heating chamber, the first heating chamber, the second heating chamber and the remaining heat chamber.

13. A dezincing method which heats a galvanized steel plate to evaporate and remove zinc, the method comprising the steps of:
feeding the galvanized steel plate and a carbon-containing material into a heating container having a feeding port for feeding the galvanized steel plate;
evaporating and removing zinc of the fed galvanized steel plate using inductive heating of the galvanized steel plate by a heating coil wound around an outer periphery of the heating container and connected to a heating power supply, and heating caused by heat of at least one hollow rod body disposed in the heating container;
reacting the fed carbon-containing material with oxygen in the container to generate a carbon monoxide gas and establishing a reducing atmosphere in the container by the carbon monoxide gas to suppress oxidation of zinc; and
discharging the evaporated zinc and the generated carbon monoxide gas to an outside from a hole drilling part formed in the rod body through an inner side of the hollow rod body.

14. The dezincing method according to claim 13, wherein a gas for controlling the reducing atmosphere is vented into the heating container.

15. The dezincing method according to claim 13, wherein the evaporated zinc and the generated carbon monoxide gas flow in the rod body toward an outside discharging direction.

## Patentansprüche

1. Entzinkungsvorrichtung, die Folgendes umfasst:
a) einen Erwärmungsbehälter mit einer Beschickungsöffnung zum Einführen einer galvanisierten Stahlplatte;
b) eine Heizspirale, die um einen Außenumfang des Erwärmungsbehälters gewickelt und mit einer Erwärmungsstromversorgung verbunden ist;
c) mindestens einen Stabkorpus, der in dem Erwärmungsbehälter angeordnet ist, wobei der Stabkorpus hohl ist und mit einem Lochbohrteil versehen ist, der mit einem Inneren des Stabkorpus in Verbindung steht;
d) ein Abzugsmittel zum Ablassen eines Gases in dem Behälter aus dem Lochbohrteil nach draußen durch den hohlen Stabkorpus;
e) ein Ausgabemittel zum Ausgeben der Stahlplatte, von der das Zink entfernt wurde, um einen zuvor festgelegten Betrag nach außerhalb der Vorrichtung,
**dadurch gekennzeichnet, dass**
das Ausgabemittel unter dem Erwärmungsbehälter angeordnet ist; und
die Entzinkungsvorrichtung des Weiteren Folgendes umfasst:
f) eine erste Erwärmungskammer zum Anlegen von Wärme an die galvanisierte Stahlplatte;
g) eine zweite Erwärmungskammer, die unter der ersten Erwärmungskammer positioniert ist, wobei die zweite Erwärmungskammer einen Raum aufweist, um Wärme einer Temperatur, die höher als eine Erwärmungstemperatur in der ersten Erwärmungskammer ist, an die in der ersten Erwärmungskammer erwärmte galvanisierte Stahlplatte anzulegen; und
h) ein Öffnungs- und Schließmittel zum hermetischen Sektionieren der ersten Erwärmungskammer und der zweiten Erwärmungskammer und zum Abwerfen und Bewegen der galvanisierten Stahlplatte aus der ersten Erwärmungskammer in die zweite Erwärmungskammer,
wobei die Heizspirale um die Außenumfänge der ersten Erwärmungskammer und der zweiten Erwärmungskammer gewickelt ist und die galvanisierte Stahlplatte in der ersten Erwärmungskammer und der zweiten Erwärmungskammer erwärmt.

2. Entzinkungsvorrichtung nach Anspruch 1, wobei der Stabkorpus ein Material mit einer Affinität für induktive Erwärmung umfasst.

3. Entzinkungsvorrichtung nach Anspruch 1, wobei die Entzinkungsvorrichtung mehrere Heizspiralen umfasst und die Heizspiralen jeweils bei verschiedenen Temperaturen heizen.

4. Entzinkungsvorrichtung nach Anspruch 3, wobei die Heizspirale unter den mehreren Heizspiralen, die an einer tieferen Stelle angeordnet ist, bei einer höheren Temperatur heizt.

5. Entzinkungsvorrichtung nach Anspruch 1, wobei die Entzinkungsvorrichtung mehrere Heizspiralen umfasst und die Heizspiralen jeweils mit verschiedenen Frequenzen beaufschlagt werden.

6. Entzinkungsvorrichtung nach Anspruch 1, wobei mehrere Lochbohrteile ausgebildet sind und der Durchmesser und/oder die Anzahl der Lochbohrteile vom oberen Teil in Richtung des unteren Teils des Stabkorpus variieren.

7. Entzinkungsvorrichtung nach Anspruch 1, wobei mehrere Stabkörper in dem Erwärmungsbehälter angeordnet sind.

8. Entzinkungsvorrichtung nach Anspruch 1, wobei der mindestens eine Stabkorpus in der Mitte des Erwärmungsbehälters angeordnet ist.

9. Entzinkungsvorrichtung nach Anspruch 1, wobei der Erwärmungsbehälter ein metallischer Behälter ist und eine Innenwand aufweist, die mit der galvanisierten Stahlplatte in Kontakt gebracht wird, wobei die Innenwand ein elektrisch isolierendes Wärmedämmmaterial umfasst.

10. Entzinkungsvorrichtung nach Anspruch 1, die des Weiteren eine Vorerwärmungskammer umfasst, die oberhalb der ersten Erwärmungskammer angeordnet ist, wobei die Vorerwärmungskammer eine Beschickungsöffnung zum Einführen der galvanisierten Stahlplatte aufweist und einen Raum aufweist, um Wärme einer Temperatur, die niedriger als eine Erwärmungstemperatur in der ersten Erwärmungskammer ist, an die zugeführte galvanisierte Stahlplatte anzulegen,
wobei das Öffnungs- und Schließmittel die Vorerwärmungskammer und die erste Erwärmungskammer hermetisch sektioniert und die galvanisierte Stahlplatte aus der Vorerwärmungskammer in die erste Erwärmungskammer abwirft und bewegt.

11. Entzinkungsvorrichtung nach Anspruch 1, die des Weiteren eine Restwärmekammer umfasst, die unter der zweiten Erwärmungskammer positioniert ist und die galvanisierte Stahlplatte in der zweiten Erwärmungskammer in einem erwärmten Zustand hält.

12. Entzinkungsvorrichtung nach Anspruch 11, die des Weiteren ein Abzugsrohr umfasst, das mit mindestens einer der Vorerwärmungskammer, der ersten Erwärmungskammer, der zweiten Erwärmungskammer und der Restwärmekammer verbunden ist.

13. Entzinkungsverfahren, das eine galvanisierte Stahlplatte erwärmt, um Zink zu verdampfen und zu entfernen, wobei das Verfahren folgende Schritte umfasst :
Einführen der galvanisierten Stahlplatte und eines kohlenstoffhaltigen Materials in einen Erwärmungsbehälter, der eine Beschickungsöffnung zum Einführen der galvanisierten Stahlplatte aufweist;
Verdampfen und Entfernen von Zink der zugeführten galvanisierten Stahlplatte mittels induktiver Erwärmung der galvanisierten Stahlplatte durch eine Heizspirale, die um einen Außenumfang des Erwärmungsbehälters gewickelt und mit einer Erwärmungsstromversorgung verbunden ist, und
Erwärmen durch Wärme von mindestens einem hohlen Stabkorpus, der in dem Erwärmungsbehälter angeordnet ist;
Reagieren des zugeführten kohlenstoffhaltigen Materials mit Sauerstoff in dem Behälter zum Erzeugen eines Kohlenmonoxidgases und Herstellen einer reduzierenden Atmosphäre in dem Behälter durch das Kohlenmonoxidgas, um die Oxidation von Zink zu unterdrücken; und
Ablassen des verdampften Zinks und des erzeugten Kohlenmonoxidgases zu einer Außenseite aus einem in dem Stabkorpus ausgebildeten Lochbohrteil durch eine Innenseite des hohlen Stabkorpus.

14. Entzinkungsverfahren nach Anspruch 13, wobei ein Gas zum Steuern der reduzierenden Atmosphäre in den Erwärmungsbehälter hinein entlüftet wird.

15. Entzinkungsverfahren nach Anspruch 13, wobei das verdampfte Zink und das erzeugte Kohlenmonoxidgas in dem Stabkorpus in einer nach draußen gerichteten Auslassrichtung strömen.

## Revendications

1. Appareil dedézingage comprenant :
a) un réservoir de chauffage présentant un orifice d'alimentation pour alimenterune tôle en acier galvanisé ;
b) unebobine de chauffage enroulée autour d'une périphérie extérieure du réservoir de chauffage et raccordée à une alimentation en énergiede chauffage ;
c) au moins une tige disposée dans le réservoir de chauffage, où la tige est creuse, etmunie d'un dispositif de forage, communiquant avec l'intérieur de la tige ;
d) un orifice d'échappement pour décharger un gaz dans le réservoir depuis le dispositif de forage vers l'extérieurà traverslatige creuse ;
e) unorifice de déchargepour décharger dela plaque d'acierà partir de laquellele zinca été éliminé, d'une quantité prédéterminée vers l'extérieur de l'appareil,
**caractérisé en ce que**
le dispositif d'évacuation se situe au-dessous du réservoir de chauffage ; et
le dispositif de dézingage comprend en outre
f) une première chambre de chauffage pour appliquer de la chaleur à la plaque en acier galvanisé ;
g) une deuxième chambre de chauffage positionnée en dessous de la première chambre de chauffage, la deuxième chambre de chauffage ayant un espace pour appliquer une chaleur à une température supérieure à une température de chauffage dans la première chambre de chauffage à la plaque en acier galvanisé chauffée dans la première chambre de chauffage ; et
h) des dispositifs d'ouverture et de fermeture pour sectionner étroitement la première chambre de chauffage et la deuxième chambre de chauffage, pourdescendre et déplacer la plaque en acier galvanisé de la première chambre de chauffage à la deuxième chambre de chauffage,
où la bobine de chauffage est enroulée autour de la périphérie extérieure de la première et de la deuxième chambre de chauffage, et chauffe la tôle en acier galvanisé dans la première et la deuxième chambre de chauffage.

2. Appareil de dézingage selon la revendication 1, dans lequel la tige comprend un matériau ayant une affinité pour le chauffage par induction.

3. Appareil de dézingage selon la revendication 1, dans lequel l'appareil comprend une pluralité de bobines de chauffage et les bobines de chauffage chauffent respectivement à des températures différentes.

4. Appareil de dézingage selon la revendication 3, dans lequel la bobine de chauffage positionnée à un niveau inférieur parmi la pluralité de bobines de chauffage chauffe à une température plus élevée.

5. Appareil de dézingage selon la revendication 1, dans lequel l'appareil comprend une pluralité de bobines de chauffage et les bobines de chauffage sont rechargées respectivement à des fréquences différentes.

6. Appareil dedézingageselon la revendication 1, dans lequel unepluralité dedispositifs de foragese forme, et le diamètreet/oule nombre de dispositifs de forageest modifiédela partie supérieurevers la partie inférieurede latige.

7. Appareil dedézingageselon la revendication 1, dans lequel une pluralité de tiges est disposée dansleréservoir de chauffage.

8. Appareil dedézingage selon la revendication 1, dans lequel au moinsunetige estdisposée au centredu réservoirde chauffage.

9. Appareil dedézingage selon la revendication 1, dans lequel leréservoirde chauffage est unconteneur métalliqueetprésente une paroi intérieureen contact aveclatôle en acier galvanisé, la paroiintérieure comprenantun matériau calorifuge électro-isolant.

10. Appareil dedézingageselon la revendication 1, comprenant en outreune chambre de chauffagepréliminairepositionnée au-dessusde lapremière chambre de chauffage, la chambre de chauffage préliminaire ayant un orifice d'alimentation pour alimenter la plaque en acier galvanisé est alimentée et ayant un espace pour appliquer de la chaleur à une température inférieure à une température de chauffage dans la première chambre de chauffage à la plaque en acier galvanisé alimentée,
dans lequel les dispositifs d'ouverture et de fermeture sectionnent étroitement la chambre de chauffage préliminaire et la première chambre de chauffage, descendent et déplacent la plaqueen acier galvanisé de lachambre de chauffage préliminaire à la première chambre de chauffage.

11. Appareil dedézingageselon la revendication 1, comprenant en outreune chambre de chauffagerésiduelle placée au-dessous de la deuxième chambre de chauffage et maintenant la tôle en acier galvanisé chauffée dans la deuxième chambre de chauffage.

12. Appareil dedézingage selon la revendication 11, comprenant en outre un tuyau d'échappement relié à au moins l'une des chambres suivantes : lachambre de chauffage préliminaire, la première chambre de chauffage, la deuxième chambre de chauffage et la chambre de chauffage résiduelle.

13. Procédéde dézingage qui chauffe une plaque en acier galvanisé pour faire évaporer et éliminer le zinc, le procédé comprenant les étapes consistant à :
alimenter la tôle en acier galvanisé et un matériau carboné dans un réservoir de chauffage présentant un orifice d'alimentation pour alimenter la plaque en acier galvanisé ;
faire évaporer et éliminer du zincdela plaque en acier galvanisé alimentée grâce à un chauffagepar induction de latôle en acier galvanisé par une bobine de chauffage enroulée autour d'une périphérie extérieure du réservoir de chauffage et raccordée à une alimentation en énergie de chauffage et le chauffage provoqué par la chaleur d'au moins une tige creuse disposée dans le réservoir de chauffage ;
faire réagir le matériau carboné avec de l'oxygène dans le réservoir pour générer du monoxyde de carbone et créer une atmosphère réductrice dans le réservoir avec dumonoxyde de carbone pour arrêter l'oxydation du zinc ; et
décharger le zinc évaporé et le monoxyde de carbone généré vers l'extérieur à partir d'un dispositif de forage formé dans la tige via l'intérieur delatige creuse.

14. Procédé selon la revendication 13, dans lequel un gaz destiné au contrôle de l'atmosphère réductrice est évacuédans le réservoir de chauffage.

15. Procédé selon la revendication 13, dans lequel le zinc évaporé et le débit de monoxydede carbone générédans latige dans une direction d'évacuation extérieure.
